# FASCICULE DE BREVET EUROPEEN

(11) **EP 2 313 862 B1**
(45) Date de publication et mention de la délivrance du brevet: **18.10.2017**
(21) Numéro de dépôt: 09781933.8
(22) Date de dépôt: 18.08.2009
(51) Int. Cl.: G06T 7/00, G06T 7/20

(54) **PROCÉDÉ ET UN DISPOSITIF DE COMMANDE, À DISTANCE, D'UNE CAMÉRA EMBARQUÉE DANS UNE STATION MOBILE**
VERFAHREN UND EINRICHTUNG ZUR FERNSTEUERUNG EINER KAMERA AN BORD EINER MOBILSTATION
METHOD AND DEVICE FOR REMOTELY CONTROLLING A CAMERA ON BOARD A MOBILE STATION

(30) Priorité: 20.08.2008 FR 0855644
(43) Date de publication de la demande: 27.04.2011
(73) Titulaire: European Aeronautic Defence And Space Company Eads France, 75016 Paris (FR)
(72) Inventeur: STURZEL, Marc, F-92120 Montrouge (FR)
(74) Mandataire: Ilgart, Jean-Christophe
(86) Numéro de dépôt international: PCT/EP2009/060650
(87) Numéro de publication internationale: WO 2010/020625

(56) Documents cités:
- EP-A- 1 329 850
- WO-A-2004/054223
- FR-A- 2 794 880

## Description

### DOMAINE TECHNIQUE

L'invention se situe dans le domaine de la commande à distance d'un dispositif embarqué dans un véhicule mobile et concerne plus spécifiquement un procédé et un dispositif de commande, à partir d'une station distante, d'une caméra embarquée dans une station mobile transmettant à ladite station distante des images comportant au moins un objet cible à localiser dans une zone explorée par ladite caméra.

L'invention concerne également un programme d'ordinateur mémorisé sur un support d'enregistrement et adapté, lorsqu'il est exécuté sur un ordinateur pour mettre en oeuvre le procédé selon l'invention.

### ÉTAT DE LA TECHNIQUE ANTÉRIEURE

La commande distante d'une caméra mobile par un dispositif de commande situé dans une station distante est réalisée par un échange de signaux entre le dispositif de commande et la caméra selon des techniques et des protocoles de communication adaptés à la distance, à la vitesse de déplacement de la caméra ainsi qu'aux conditions de transmission.

EP-A-1 329 850 divulgue un procédé, un dispositif et un programme d'ordinateur pour la détection d'un objet cible mobile ou immobile à partir des images capturées par une caméra située sur une station mobile; la détection comporte l'usage d'un filtre de Gabor et la détermination des vecteurs vitesse de **l'arrière-plan** et de l'objet cible. WO 2004/054223A décrit une station mobile ayant une caméra pour la détection d'objets cibles à partir de la différence entre images consécutives et la détermination d'une valeur de mouvement. FR-A-2 794 880 décrit un procédé automatique de détermination et de pistage d'une cible en mouvement par une caméra électronique en calculant les variations de couleur entre deux images consécutives. Les opérations de détermination et de pistage de la cible sont effectuées par une unité centrale en communication avec la caméra, ladite unité centrale recevant les images capturées par la caméra et envoyant à la caméra des commandes de contrôle pour p.ex. déplacer la caméra dans le but de suivre la cible.

Lorsque la caméra est embarquée dans un drone par exemple et que les signaux échangés transitent sur un canal lent, par exemple via un satellite, il se produit un phénomène de latence dû au délai de transmission des signaux de commande de la station distante vers le drone sur le canal lent, et au délai de transmission des images de la caméra vers la station distante. Ainsi, lorsqu'un opérateur, situé au niveau de la station distante, désigne un objet cible sur une image visualisée sur cette station distante, et transmet une commande à la caméra pour lui indiquer de pister l'objet désigné, la commande atteint la caméra au bout du délai de latence au cours duquel l'objet désigné par l'opérateur sur l'image à un instant T n'a plus la même position sur l'image vue au niveau du drone au moment de la réception de la commande. Plus précisément, si la latence est de L secondes, l'image visualisée sur la station sol à l'instant T est celle acquise à bord à l'instant T-L, et la commande effectuée depuis la station à l'instant T sera réceptionnée à bord à l'instant T+L.

Si l'opérateur envoie une deuxième commande à la caméra avant que celle-ci n'ait interprété la commande précédente, il se produit un phénomène de pompage qui a pour conséquence que l'opérateur perd le contrôle de la caméra dans la mesure où il ignore l'impact des commandes envoyées pendant le délai de latence.

Un but de l'invention est de pallier les inconvénients de l'art antérieur décrits ci-dessus.

### EXPOSÉ DE L'INVENTION

Ces buts sont atteints au moyen d'un procédé de commande, à partir d'une station distante, d'une caméra embarquée dans une station mobile transmettant à ladite station distante des images comportant au moins un objet cible à localiser dans une zone explorée par ladite caméra.

Le procédé selon l'invention comporte les étapes suivantes:
- la station distante estime le délai de latence L séparant l'envoi d'une commande vers la station mobile et l'exécution de ladite commande par ladite station mobile,
- la station mobile transmet à la station distante une première image acquise par ladite caméra à un instant T-L,
- la station distante transmet à un instant T à la station mobile une position de l'objet cible sur ladite première image,
- la station mobile compare la position de l'objet cible sur la première image, à la position dudit objet sur au moins une deuxième image acquise postérieurement à ladite première image à un instant T+L,
- si les positions comparées sont identiques dans les deux images recalées l'une sur l'autre, la station mobile transmet ladite position à la station distante pour validation,
- sinon, la station mobile détermine en temps réel, de façon autonome, la trajectoire de l'objet cible sur ladite deuxième image, puis commande en temps réel la caméra embarquée pour effectuer le pistage de l'objet cible sur la trajectoire prédite.

Préférentiellement, la trajectoire de l'objet cible sur la deuxième image est déterminée par un calcul prédictif en fonction de la position et du vecteur mouvement de l'objet cible à l'instant T-L.

Dans un premier mode de réalisation, le procédé selon l'invention comporte en outre les étapes suivantes :
au niveau de la station distante:
   - recaler la première image et la deuxième image,
   - déterminer la position et le vecteur vitesse de l'ensemble des objets en mouvement dans la scène observée par la caméra,
   - déterminer la position et le vecteur vitesse de l'objet cible sur la première image, soit parmi les objets en mouvement, soit parmi les éléments du fond,
   - calculer une prédiction de la position et de la vitesse de l'objet cible à l'instant T+L,
   - transmettre de la station distante vers la station mobile la position désignée, la position prédite et le vecteur vitesse prédit.

Grâce au procédé selon l'invention, la station mobile peut déterminer la position de l'objet cible sur la deuxième image, acquise à l'instant T+L, recalée par rapport à la première image, acquise à l'instant T-L, en fonction de la position prédite et le vecteur vitesse prédit, sans commande supplémentaire du mouvement de la caméra à partir de la station distante.

Dans une variante de mise en oeuvre, le recalage de la première image et de la deuxième image est réalisé par estimation de l'homographie de passage, et le délai de latence L est estimé par horodatage des données et par synchronisation desdites stations distante et mobile.

Dans un deuxième mode de réalisation, le procédé comporte en outre une étape consistant à mémoriser les homographies de passage, image à image, et la position de l'ensemble des objets mobiles de l'instant T-L à l'instant T+L dans la station mobile.

Dans ce deuxième mode de réalisation, la prédiction sur la station distante n'est plus nécessaire. Le procédé s'opère de la manière suivante :
- à la réception, par la station mobile, à un instant T+L d'une requête de localisation de l'objet cible désigné à un instant T sur une image locale à la station mobile, acquise postérieurement à l'image transmise à la station distante à l'instant T-L, la position et le vecteur vitesse transmis depuis la station distante correspondent à ceux calculés sur l'image prise à l'instant T-L,
- ils sont mis en correspondance avec les données enregistrées à l'instant T-L à bord de la station mobile,
- une fois la mise en correspondance effectuée à l'instant T-L, les données mémorisées à bord de la station mobile permettent d'en déduire, par application des homographies successives ou par suivi des pistes des objets en mouvement, selon que la cible soit fixe ou en mouvement, la position et le vecteur vitesse de l'objet cible à l'instant courant T+L.

L'objet cible peut typiquement être un véhicule, un individu, un bâtiment ou tout type d'aéronef fixe ou mobile.

Dans le cas où l'objet cible est mobile, si sa trajectoire quitte le champ de vision de la caméra à un instant t compris entre T-L et T+L, la position dudit objet cible est estimée dans la station mobile par un calcul prédictif en fonction de sa position et de son vecteur vitesse à l'instant t, à partir de l'instant t et à chaque image suivante.

Le procédé permet ainsi à la caméra de modifier de façon autonome son champ de vision afin d'y inclure la position ainsi prédite de l'objet cible sans commande supplémentaire à cet effet. Le calcul prédictif s'effectue grâce à l'ensemble des homographies de passage des images successives de l'instant t à l'instant T+L et à la prédiction dans l'image t du mouvement de l'objet en fonction de son mouvement lors des images précédentes.

Dans une application particulière du procédé selon l'invention, la caméra est embarquée dans un drone.

Le procédé selon l'invention est mis en oeuvre par un dispositif de commande, à partir d'une station distante, d'une caméra embarquée dans une station mobile transmettant à ladite station distante des images comportant au moins un objet cible à localiser dans une zone explorée par ladite caméra.

Selon l'invention, ladite station distante comporte :
- des moyens pour estimer le délai de latence L séparant l'envoi d'une commande vers la station mobile et l'exécution de ladite commande par ladite station mobile,
et ladite station mobile comporte :
- des moyens pour comparer une position de l'objet cible sur une première image acquise par ladite caméra à un instant T-L à la position dudit objet sur au moins une deuxième image acquise postérieurement à ladite première image à un instant T+L,
- des moyens de calcul prédictif apte à déterminer, en temps réel, la trajectoire de l'objet cible sur ladite deuxième image,
- des moyens pour commander en temps réel la caméra embarquée pour effectuer le pistage de l'objet cible sur la trajectoire prédite.

Le procédé selon l'invention est implémenté au moyen d'un logiciel mémorisé sur un support d'enregistrement et adapté, lorsqu'il est exécuté sur un ordinateur, pour commander une caméra embarquée dans une station mobile à partir d'une station distante, ladite station mobile transmettant à ladite station distante des images comportant au moins un objet cible à localiser dans une zone explorée par ladite caméra.

Ce logiciel comporte :
- un premier module exécutable dans la station distante comportant :
   - des instructions pour estimer le délai de latence L séparant l'envoi d'une commande vers la station mobile et l'exécution de ladite commande par ladite station mobile,
   - des instructions pour déterminer le mouvement d'une image à l'autre des objets fixes et des objets mobiles afin de faciliter la désignation de l'objet cible,
- un deuxième module exécutable dans la station mobile comportant :
   - des instructions pour comparer une position de l'objet cible sur une première image acquise par ladite caméra à un instant T-L à la position dudit objet sur au moins une deuxième image acquise postérieurement à ladite première image à un instant T+L,
   - des instructions pour déterminer en temps réel la trajectoire de l'objet cible sur ladite deuxième image, et
   - des instructions pour commander en temps réel la caméra embarquée pour effectuer le pistage de l'objet cible sur la trajectoire prédite.

### BRÈVE DESCRIPTION DES DESSINS

D'autres caractéristiques et avantages de l'invention ressortiront de la description qui suit, prise à titre d'exemple non limitatif, en référence aux figures annexées dans lesquelles :
- La figure 1 illustre schématiquement un exemple de mise en oeuvre du procédé selon l'invention
- La figure 2 est un schéma bloc illustrant des traitements d'images effectués sur la station mobile de la figure 1,
- La figure 3 illustre les traitements effectués sur une station distante de la figure 1,
- La figure 4 illustre schématiquement les étapes d'un mode particulier de réalisation de l'invention.

### EXPOSÉ DÉTAILLÉ DE MODES DE RÉALISATION PARTICULIERS

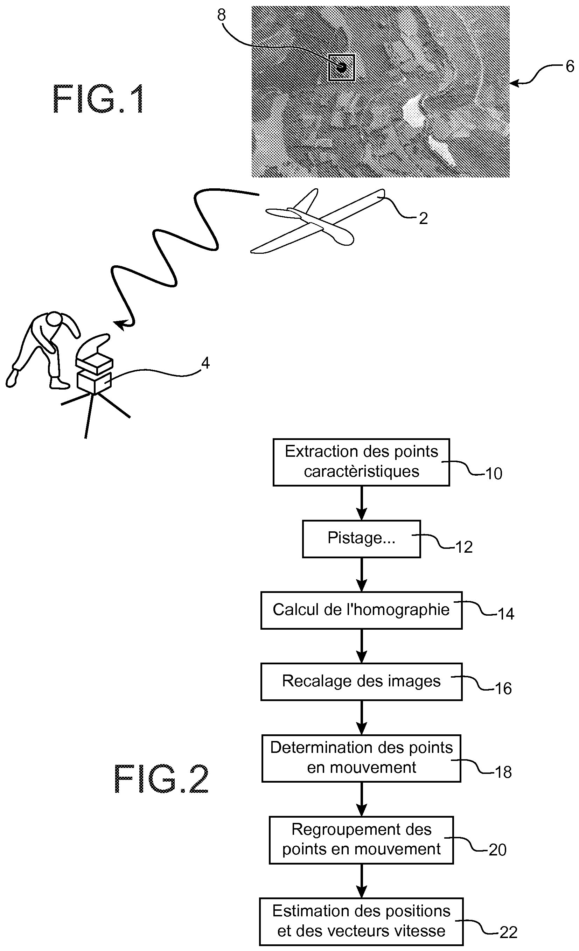

La figure 1 illustre schématiquement station mobile 2 équipée d'une ou de plusieurs caméras d'observation contrôlée(s) depuis une station distante 4.

La station mobile 2 est un drone survolant une zone 6 sur laquelle se trouve un objet cible 8, un véhicule par exemple, dont la position doit être connue à tout moment par la station distante 4.

La station distante 4 est typiquement une station sol de contrôle de drones.

Les caméras embarquées sur le drone 2 transmettent en permanence à la station distante 4 des images de la zone 6. En réponse, la station distante 4 transmet au drone 2 des signaux de désignation de la position de l'objet cible 8 sur les images reçues.

Comme cela est illustré par la figure 2, le canal de transmission induit un délai de latence L. De ce fait, une image observée sur la station 4 à un instant T correspond à une image acquise par la caméra embarquée sur le drone 2 à l'instant T-L, et toute commande envoyée à l'instant T depuis la station distante 4 vers le drone 2 arrivera au drone à l'instant T+L.

Par conséquent, le pistage de l'objet cible 8 par la caméra nécessite une réactualisation permanente des signaux de désignation transmis au drone 2.

Le procédé selon l'invention permet au drone de réaliser cette réactualisation de façon autonome évitant des transmissions successives de signaux de désignation au drone 2.

Cette réactualisation est obtenue par des traitements parallèles effectués de façon répartis entre la station distante 2 et le drone 2.

Soit T l'instant précis de la désignation d'un objet cible sur une image reçue par la station distante 4, et que toutes les images reçues par la station distante 4 sont préalablement horodatées et chacune de ces images est identifiée par un identifiant unique.

La figure 2 illustre les traitements des images effectués sur la station distante 4. Ces traitements comportent les étapes suivantes :
- extraire (étape 10) les points caractéristiques sur les images par un ou plusieurs capteurs ;
- pister (étape 12) lesdits points caractéristiques d'une image à l'autre ;
- calculer (étape 14) l'homographie de passage entre deux images qu'elles soient successives ou pas à partir des points mis en correspondance ;
- recaler (étape 16) au moyen de ladite l'homographie de passage une image dans le référentiel de l'image précédente, et
- déterminer (étape 18) quels points ou quels pixels sont en mouvement dans le référentiel de la scène observée ;
- regrouper (étape 20) les points en mouvement en objets via des critères géométriques tels que la distances relatives et l'adéquation du mouvement ;
- estimer (étape 22) les positions et les vecteurs vitesses dans l'image des objets en fonction des positions dans une ou plusieurs images précédentes.

Dans un mode particulier de mise en oeuvre de l'invention, on fixe un nombre moyen de points à pister par image qui dépend globalement du nombre de pixels. Typiquement, on considèrera les points de Harris ou de Plessey en encore des descripteurs plus complexes tels que les SIFT ou les SURF). Le pistage peut être réalisé par une méthode de type KLT (Kanade-Lucas-Tomasi) ou par un filtre de Kalman associé à chacun des points, ou plus simplement par recalage du nuage de points via une transformée de Hough par exemple, et on ajoute de nouveaux points dès que de nouvelles parties d'image apparaissent ou dès que des points pistés sortent de l'image. Les nouveaux points sont calculés par la méthode décrite précédemment, typiquement la méthode de Harris, aux zones de l'image les moins denses en points pistés.

Dans les cas où les disparités 3D seraient trop visibles, vols à très basse altitude, notamment, le calcul de l'homographie est remplacé par le calcul de la matrice fondamentale ou de la matrice essentielle, par une approche de type RANSAC, afin d'être fidèle à la structure projective de la scène observée.

Une désignation de cible à l'instant T se traduit par la sélection d'un point sur l'image.

Si le point de désignation est sur un objet en mouvement, la désignation correspondra à la sélection de l'objet, sinon il s'agira d'un point du « fond » dont le vecteur vitesse correspond au vecteur de déplacement translationnel du fond.

Dans un mode particulier de mise en oeuvre du procédé selon l'invention, le système sélectionne automatiquement l'objet en mouvement le plus proche de la désignation de l'opérateur 8.

Dans un autre mode de mise en oeuvre de l'invention, la désignation est effectuée par un algorithme automatique de détection/reconnaissance de cible. La commande est alors envoyée au drone 2 sous forme d'une structure comprenant une position image, un vecteur vitesse, une nature (cible fixe ou mobile) et l'horodatage (l'instant T-L d'acquisition de l'image traitée par la station distante à l'instant T).

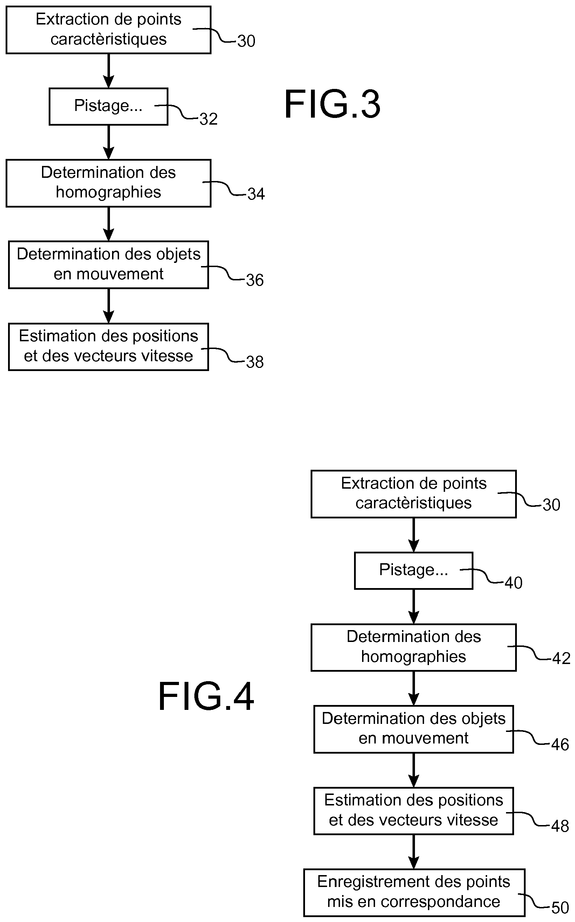

La figure 3 illustre les traitements effectués sur le drone 2.

Ces traitements comportent les étapes suivantes :
- extraire (étape 30) des points caractéristiques sur les images par un ou plusieurs capteurs,
- pister (étape 32) lesdits points caractéristiques par la même méthode que celle utilisée dans la station distante 4,
- déterminer (étape 34) des homographies de passage d'une image à l'autre par la même méthode que celle utilisée dans la station distante 4,
- déterminer (étape 36) des objets en mouvement, et
- estimer (étape 38) les positions et les vecteurs vitesse desdits objets à chaque image par la même méthode que celle utilisée dans la station distante

Lorsqu'une une commande de désignation arrive à l'instant T+L et fait référence au vecteur d'état représentant la position et les vecteurs vitesses d'un objet cible sur l'image acquise en T-L une prédiction du mouvement sur 2L secondes est effectuée grâce à ce vecteur d'état transmis. Notons que ce vecteur est connu grâce à l'horodatage transmis avec les images du drone 2 vers la station distante 4.

S'il s'agit d'une cible fixe, le point prédit est considéré comme cible, et s'il s'agit d'une cible mobile, l'objet mobile le plus conforme avec la prédiction, tant en position qu'en vecteur vitesse, est choisi comme cible. Si la prédiction sort du cadre de l'image, la position est néanmoins prise en compte. Elle permettra de ramener la cible dans le champ de vue de la caméra en modifiant l'axe de visée de ladite caméra.

Dans un mode particulier de réalisation, la prédiction est effectuée à l'aide d'un filtre de Kalman. Il est à noter que cette prédiction peut être effectuée au choix à bord ou au sol.

Ainsi, l'objet désigné à l'instant T sur l'image T-L étant désormais retrouvé sur l'image T+L, il est alors possible de pister l'objet. Les actions prédéterminées peuvent alors être appliquées, comme par exemple le centrage de l'axe de visée sur la cible désignée.

La figure 4 illustre schématiquement les étapes d'un mode particulier de réalisation de l'invention.

Selon ce mode de réalisation, le procédé comporte les étapes suivantes :
- extraire (étape 40) des points caractéristiques sur les images par un ou plusieurs capteurs,
- pister (étape 42) lesdits points caractéristiques par la même méthode que celle utilisée dans la station distante 4,
- déterminer (étape 44) des homographies de passage d'une image à l'autre par la même méthode que celle utilisée dans la station distante 4,
- déterminer (étape 46) des objets en mouvement, et,
- estimer (étape 48) les positions et les vecteurs vitesse desdits objets à chaque image par la même méthode que celle utilisée dans la station distante 4,
- enregistrer (étape 50) pour toutes les images sur (au minimum) les 2L dernières secondes tous les points mis en correspondance, les homographies et les objets en mouvement (position et vecteur vitesse à chaque instant).

Lorsqu'une commande de désignation arrive à l'instant T+L au drone 2, et fait référence au vecteur d'état (position et vitesses) d'une cible sur l'image acquise en T-L ; l'historique enregistré à l'instant T-L est alors consulté pour retrouver l'objet désigné.

S'il s'agit d'un objet en mouvement, il apparaîtra dans la liste des objets en mouvement enregistrés. Le plus fiable sera sélectionné. On utilise alors l'historique du pistage de ce point pour retrouver directement sa position dans l'image courante.

Si le point sort, momentanément ou non, du cadre de l'image, sa position est prédite grâce aux homographies de passage, au vecteur vitesse lors de la dernière observation et au recalage de ce vecteur vitesse dans les référentiels des images suivantes.

S'il s'agit d'un objet du « fond », il est désigné par sa position dans l'image T-L. Sa position dans les images suivantes est alors calculée par application des homographies de passage entre images successives. La position ainsi obtenue sur chaque image peut être validée par corrélation, par exemple en utilisant un pistage de type KLT.

La prédiction peut continuer même lorsque l'objet sort, momentanément ou non, du champ de vue de la caméra.

Dans le cas d'un objet fixe à l'instant T-L mais mobile à l'instant T+L, les deux techniques précédentes sont exploitées, respectivement de l'instant t à T+L et de l'instant T-L à l'instant t, où l'instant t correspond au moment où l'objet a commencé à se déplacer.
- pistage de l'objet désigné retrouvé dans l'image T+L. Ce cas inclut une position estimée en dehors du cadre de l'image courante.
- application des actions prédéterminées (par exemple centrage de la caméra sur l'objet).

## Revendications

1. Procédé de commande, à partir d'une station distante, d'une caméra embarquée dans une station mobile transmettant à ladite station distante des images comportant au moins un objet cible à localiser dans une zone explorée par ladite caméra, procédé dans lequel :
- la station distante estime le délai de latence L séparant l'envoi d'une commande vers la station mobile et l'exécution de ladite commande par ladite station mobile,
- la station mobile transmet à la station distante une première image acquise par ladite caméra à un instant T-L,
- la station distante transmet à un instant T à la station mobile une position de l'objet cible sur ladite première image,
- la station mobile compare la position de l'objet cible sur la première image, à la position dudit objet sur au moins une deuxième image acquise postérieurement à ladite première image à un instant T+L,
- si les positions comparées sont identiques dans les deux images recalées l'une sur l'autre, la station mobile transmet ladite position à la station distante pour validation,
- sinon, la station mobile détermine en temps réel, de façon autonome, la trajectoire de l'objet cible sur ladite deuxième image, puis commande en temps réel la caméra embarquée pour effectuer le pistage de l'objet cible sur la trajectoire prédite.

2. Procédé selon la revendication 1, dans lequel la trajectoire de l'objet cible sur la deuxième image est déterminée par un calcul prédictif en fonction de la position et du vecteur mouvement de l'objet cible à l'instant T-L.

3. Procédé selon la revendication 2, **caractérisé en ce qu'**il comporte en outre les étapes suivantes :
au niveau de la station distante:
- recaler la première image et la deuxième image,
- déterminer la position et le vecteur vitesse de l'ensemble des objets en mouvement dans la scène observée par la caméra,
- déterminer la position et le vecteur vitesse de l'objet cible sur la première image, soit parmi les objets en mouvement, soit parmi les éléments du fond,
- calculer une prédiction de la position et de la vitesse de l'objet cible à l'instant T+L,
- transmettre à la station mobile la position désignée, la position prédite et le vecteur vitesse prédit.

4. Procédé selon la revendication 3, dans lequel le recalage de la première image et de la deuxième image est réalisé par estimation de l'homographie de passage.

5. Procédé selon la revendication 4, comportant en outre une étape consistant à mémoriser les homographies de passage image à image et la position de l'ensemble des objets mobiles de l'instant T-L à l'instant T+L dans la station mobile.

6. Procédé selon la revendication 1, dans lequel le délai de latence L est estimé par horodatage des données et par synchronisation desdites stations distante et mobile.

7. Procédé selon la revendication 1, dans lequel l'objet cible est fixe ou mobile.

8. Procédé selon la revendication 7, dans lequel si l'objet cible est mobile et si sa trajectoire quitte le champ de vision de la caméra à un instant t compris entre T-L et T+L, la position dudit objet cible est estimée dans la station mobile par un calcul prédictif en fonction de sa position et de son vecteur vitesse à l'instant t.

9. Procédé selon l'une des revendications 1 à 8, dans lequel la caméra est embarquée dans un drone.

10. Procédé selon l'une des revendications 1 à 9, dans lequel l'objet cible est un individu, un véhicule ou tout type d'aéronef.

11. Dispositif de commande, à partir d'une station distante, d'une caméra embarquée dans une station mobile transmettant à ladite station distante des images comportant au moins un objet cible à localiser dans une zone explorée par ladite caméra, dispositif, **caractérisé en ce que** ladite station distante comporte:
- des moyens pour estimer le délai de latence L séparant l'envoi d'une commande vers la station mobile et l'exécution de ladite commande par ladite station mobile,
et ladite station mobile comporte :
- des moyens pour comparer une position de l'objet cible sur une première image acquise par ladite caméra à un instant T-L à la position dudit objet sur au moins une deuxième image acquise postérieurement à ladite première image à un instant T+L,
- des moyens de calcul prédictif apte à déterminer, en temps réel, la trajectoire de l'objet cible sur ladite deuxième image,
- des moyens pour commander en temps réel la caméra embarquée pour effectuer le pistage de l'objet cible sur la trajectoire prédite.

12. Programme d'ordinateur mémorisé sur un support d'enregistrement et comprenant des instructions pour commander, lorsqu'il est exécuté sur un ordinateur, une caméra embarquée dans une station mobile à partir d'une station distante, ladite station mobile transmettant à ladite station distante des images comportant au moins un objet cible à localiser dans une zone explorée par ladite caméra,
ce logiciel comporte :
- un premier module exécutable dans la station distante comportant :
• des instructions lisibles par ordinateur pour estimer le délai de latence L séparant l'envoi d'une commande vers la station mobile et l'exécution de ladite commande par ladite station mobile,
• des instructions lisibles par ordinateur pour déterminer le mouvement d'une image à l'autre des objets fixes et des objets mobiles afin de faciliter la désignation de l'objet cible,
- un deuxième module exécutable dans la station mobile comportant :
• des instructions lisibles par ordinateur pour comparer une position de l'objet cible sur une première image acquise par ladite caméra à un instant T-L à la position dudit objet sur au moins une deuxième image acquise postérieurement à ladite première image à un instant T+L,
• des instructions lisibles par ordinateur pour déterminer en temps réel la trajectoire de l'objet cible sur ladite deuxième image, et
• des instructions lisibles par ordinateur pour commander en temps réel la caméra embarquée pour effectuer le pistage de l'objet cible sur la trajectoire prédite.

## Patentansprüche

1. Verfahren zur Steuerung von einer entfernten Station aus einer Kamera, die in eine mobile Station eingebaut ist, die an die entfernte Station Bilder überträgt, umfassend mindestens ein Zielobjekt, das in einer von der Kamera erforschten Zone zu lokalisieren ist, wobei bei dem Verfahren:
- die entfernte Station die Latenzzeit L zwischen dem Senden eines Befehls zu der mobilen Station und der Ausführung des Befehls durch die mobile Station schätzt,
- die mobile Station an die entfernte Station ein erstes Bild überträgt, das von der Kamera zu einem Zeitpunkt T-L erfasst wurde,
- die entfernte Station zu einem Zeitpunkt T an die mobile Station eine Position des Zielobjekts auf dem ersten Bild überträgt,
- die mobile Station die Position des Zielobjekts auf dem ersten Bild mit der Position des Objekts auf mindestens einem zweiten Bild vergleicht, das nach dem ersten Bild zu einem Zeitpunkt T+L erfasst wurde,
- wenn die verglichenen Positionen in den zwei übereinander ausgerichteten Bildern identisch sind, die mobile Station die Position an die entfernte Station zur Validierung überträgt,
- anderenfalls die mobile Station in Echtzeit autonom die Bahn des Zielobjekts auf dem zweiten Bild bestimmt und dann in Echtzeit die eingebaute Kamera steuert, um die Spurverfolgung des Zielobjekts auf der vorgenannten Bahn durchzuführen.

2. Verfahren nach Anspruch 1, bei dem die Bahn des Zielobjekts auf dem zweiten Bild durch eine prädiktive Berechnung in Abhängigkeit von der Position und dem Bewegungsvektor des Zielobjekts zu dem Zeitpunkt T-L bestimmt wird.

3. Verfahren nach Anspruch 2, **dadurch gekennzeichnet, dass** es ferner die folgenden Schritte umfasst:
im Bereich der entfernten Station:
- Ausrichten des ersten Bildes und des zweiten Bildes,
- Bestimmen der Position und des Geschwindigkeitsvektors der Gesamtheit der Objekte in Bewegung in der von der Kamera beobachteten Szene,
- Bestimmen der Position und des Geschwindigkeitsvektors des Zielobjekts auf dem ersten Bild entweder unter den Objekten in Bewegung oder unter den Elementen des Hintergrunds,
- Berechnen einer Vorhersage der Position und der Geschwindigkeit des Zielobjekts zum Zeitpunkt T+L,
- Übertragen der bezeichneten Position, der vorhergesagten Position und des vorhergesagten Geschwindigkeitsvektors an die mobile Station.

4. Verfahren nach Anspruch 3, bei dem das Ausrichten des ersten Bildes und des zweiten Bildes durch Schätzen der Durchgangshomografie erfolgt.

5. Verfahren nach Anspruch 4, ferner umfassend einen Schritt, darin bestehend, die Durchgangshomografien Bild für Bild und die Position der Gesamtheit der mobilen Objekte vom Zeitpunkt T-L bis zum Zeitpunkt T+L in der mobilen Station zu speichern.

6. Verfahren nach Anspruch 1, bei dem die Latenzzeit L durch Zeitstempelung der Daten und durch Synchronisation der entfernten und der mobilen Station geschätzt wird.

7. Verfahren nach Anspruch 1, bei dem das Zielobjekt fest oder beweglich ist.

8. Verfahren nach Anspruch 7, bei dem, wenn das Zielobjekt beweglich ist, und wenn seine Bahn das Sichtfeld der Kamera zu einem Zeitpunkt t zwischen T-L und T+L verlässt, die Position des Zielobjekts in der mobilen Station durch eine prädiktive Berechnung in Abhängigkeit von seiner Position und seinem Geschwindigkeitsvektor zum Zeitpunkt t geschätzt wird.

9. Verfahren nach einem der Ansprüche 1 bis 8, bei dem die Kamera in eine Drohne eingebaut ist.

10. Verfahren nach einem der Ansprüche 1 bis 9, bei dem das Zielobjekt ein Individuum, ein Fahrzeug oder jeder Flugzeugtyp ist.

11. Vorrichtung zur Steuerung von einer entfernten Station aus einer Kamera, die in eine mobile Station eingebaut ist, die an die entfernte Station Bilder überträgt, umfassend mindestens ein Zielobjekt, das in einer von der Kamera erforschten Zone zu lokalisieren ist, wobei die Vorrichtung **dadurch gekennzeichnet ist, dass** die entfernte Station umfasst:
- Mittel zum Schätzen der Latenzzeit L zwischen dem Senden eines Befehls zu der mobilen Station und der Ausführung des Befehls durch die mobile Station,
und die mobile Station umfasst:
- Mittel zum Vergleichen einer Position des Zielobjekts auf dem ersten Bild, das von der Kamera zu einem Zeitpunkt T-L erfasst wurde, mit der Position des Objekts auf mindestens einem zweiten Bild, das nach dem ersten Bild zu einem Zeitpunkt T+L erfasst wurde,
- Mittel zur prädiktiven Berechnung, die geeignet sind, in Echtzeit die Bahn des Zielobjekts auf dem zweiten Bild zu bestimmen,
- Mittel zur Steuerung der eingebauten Kamera in Echtzeit, um die Spurverfolgung des Zielobjekts auf der vorhergesagten Bahn durchzuführen.

12. Computerprogramm, das auf einem Aufzeichnungsträger gespeichert ist, umfassend Befehle, um, wenn es auf einem Computer ausgeführt wird, eine in einer mobilen Station eingebaute Kamera von einer entfernten Station aus zu steuern, wobei die mobile Station an die entfernte Station Bilder überträgt, umfassend mindestens ein in einer von der Kamera erforschten Zone zu lokalisierendes Zielobjekt,
wobei diese Software umfasst:
- ein erstes in der entfernten Station ausführbares Modul, umfassend:
* von einem Computer lesbare Befehle, um die Latenzzeit L zwischen dem Senden eines Befehls an die mobile Station und der Ausführung des Befehls durch die mobile Station zu schätzen,
* von einem Computer lesbare Befehle, um die Bewegung der festen Objekte und der mobilen Objekte von einem Bild zum anderen zu bestimmen, um die Bezeichnung des Zielobjekts zu erleichtern,
- ein zweites in der mobilen Station ausführbares Modul, umfassend:
* von einem Computer lesbare Befehle, um eine Position des Zielobjekts auf einem ersten Bild, das von der Kamera zu einem Zeitpunkt T-L erfasst wurde, mit der Position des Objekts auf mindestens einem zweiten Bild zu vergleichen, das nach dem ersten Bild zu einem Zeitpunkt T+L erfasst wurde,
* von einem Computer lesbare Befehle, um in Echtzeit die Bahn des Zielobjekts auf dem zweiten Bild zu bestimmen, und
* von einem Computer lesbare Befehle, um in Echtzeit die eingebaute Kamera zu steuern, um die Spurverfolgung des Zielobjekts auf der vorhergesagten Bahn durchzuführen.

## Claims

1. A method for controlling, from a remote station, a camera on board a mobile station transmitting to the said remote station images including at least one target object to be located in a zone explored by the said camera, a method in which:
- the remote station estimates the period of latency L between the despatch of a command from the mobile station and the execution of the said command by the said mobile station,
- the mobile station transmits to the remote station a first image acquired by the said camera at an instant T-L,
- the remote station transmits at a time T to the mobile station a position of the target object in the said first image,
- the mobile station compares the position of the target object in the first image with the position of the said object in at least a second image acquired after the said first image at a time T+L,
- if the compared positions are identical in the two images realigned in relation to one other the mobile station transmits the said position to the remote station for validation,
- otherwise, the mobile station determines, in real time, independently, the trajectory of the target object in the said second image, and then controls the on-board camera in real time in order to accomplish the tracking of the target object over the predicted trajectory.

2. A method according to claim 1, in which the trajectory of the target object in the second image is determined by a predictive computation according to the position and movement vector of the target object at instant T-L.

3. A method according to claim 2, **characterised in that** it also includes the following steps:
in the remote station:
- realigning the first image and the second image,
- determining the position and speed vector of all the objects moving in the scene observed by the camera,
- determining the position and speed vector of the target object in the first image, either among the moving objects, or among the background elements,
- calculating a prediction of the position and speed of the target object at instant T+L,
- transmiting the designated position, the predicted position and the predicted speed vector to the mobile station.

4. A method according to claim 3, in which the readjustment of the first image and of the second image is accomplished by estimation of the transient homography.

5. A method according to claim 4, also including a step consisting in recording the transient homographies, image by image, and the overall position of the mobile objects from instant T-L to instant T+L in the mobile station.

6. A method according to claim 1, in which the latency time L is estimated by time-stamping of the data and by synchronisation of the said remote and mobile stations.

7. A method according to claim 1, in which the target object is fixed or mobile.

8. A method according to claim 7, in which if the target object is mobile and if its trajectory leaves the camera's field of view at an instant t between T-L and T+L, the position of the said target object is estimated in the mobile station by a predictive calculation according to its position and its speed vector at instant t.

9. A method according to any of the claims 1 to 8, in which the camera is on board a drone.

10. A method according to one of the claims 1 to 9, in which the target object is an individual, a vehicle or any type of aircraft.

11. A device for controlling, from a remote station, a camera on board a mobile station transmitting to the said remote station images including at least one target object to be located in a zone explored by the said camera, a device **characterised in that** the said remote station includes:
- means to estimate the period of latency L between the despatch of a command from the mobile station, and the execution of the said command by the said mobile station,
and the said mobile station includes:
- means to compare a position of the target object in a first image acquired by the said camera at an instant T-L with the position of the said object in at least a second image acquired after the said first image,
- means for predictive calculation able to determine, in real time, the trajectory of the target object in the said second image at a time T+L,
- means to control, in real time, the on-board camera to undertake the tracking of the target object in the predicted trajectory.

12. A computer program recorded on a recording medium and including instructions to control, when it is executed on a computer, a camera on board a mobile station from a remote station, where the said mobile station transmits to the said remote station images including at least one target object to be located in a zone explored by the said camera,
this application includes:
- a first executable module in the remote station including:
• computer-readable instructions to estimate the period of latency L between the despatch of a command from the mobile station and the execution of the said command by the said mobile station,
• computer-readable instructions to determine the movement from one image to another of the fixed objects and of the mobile objects in order to facilitate the designation of the target object,
- a second executable module in the mobile station including:
• computer-readable instructions to compare a position of the target object in a first image acquired by the said camera at an instant T-L with the position of the said object in at least a second image acquired after the said first image at a time T+L,
• computer-readable instructions to determine in real time the trajectory of the target object in the said second image, and
• computer-readable instructions to control, in real time, the on-board camera to undertake the tracking of the target object in the predicted trajectory.
